# EUROPÄISCHE PATENTANMELDUNG

(11) **EP 1 403 794 A1**
(43) Veröffentlichungstag der Anmeldung: **31.03.2004**
(21) Anmeldenummer: 02021654.5
(22) Anmeldetag: 27.09.2002
(51) Int. Cl.: G06F 17/60

(54) **Verfahren und System zur automatischen Speicherung von betriebswirtschaftlichen Daten**

(71) Anmelder: SAP Aktiengesellschaft, 69190 Walldorf (DE)
(72) Erfinder: Düvel, Olaf, 68167 Mannheim (DE); Henrich, Dirk, 55127 Mainz (DE); Nowotny, Dietmar, 69234 Dielheim (DE); Ripp, Volker, 68199 Mannheim (DE); Schorr, Martin, 69231 Rauenberg (DE); Schnuck, Volker, 68165 Mannheim (DE); Wallmeier, Reiner, 69168 Wiesloch (DE); von Zimmermann, Peter, 74918 Angelbachtal (DE)

(57) **Zusammenfassung**

Die Erfindung betrifft eine Verfahren zur automatischen Ablage von Belegen zu Geschäftsvorfällen, bei dem mit Hilfe eines Computersystems Daten zu einem Geschäftsvorfall für den Zugriff über eine oder mehrere Geschäftsanwendungen gespeichert werden und bei dem einem Geschäftsvorfall ein Identifikationscode zugeordnet wird, wobei in dem Computersystem eine oder mehrere unterschiedliche Klassen von Geschäftsvorfällen mit unterschiedliche Datenstrukturen abgebildet sind.

## Beschreibung

Die Erfindung betrifft ein Verfahren zur automatischen Ablage von Belegen zu Geschäftsvorfällen, bei dem mit Hilfe eines Computersystems Daten zu einem Geschäftsvorfall für den Zugriff über eine oder mehrere Geschäftsanwendungen gespeichert werden und bei dem einem Geschäftsvorfall ein Identifikationscode zugeordnet wird, wobei in dem Computersystem eine oder mehrere unterschiedliche Klassen von Geschäftsvorfällen mit unterschiedliche Datenstrukturen abgebildet sind.

Verfahren der genannten Art sind beispielsweise aus dem betrieblichen Rechnungswesen bekannt. Insbesondere werden derartige Verfahren mit Hilfe Computersystemen, vorzugsweise unter Einsatz von Datenbanksystemen, automatisch durchgeführt.

Eine wesentliche Aufgabe eines Rechnungswesen ist die Protokollierung aller operativen Prozesse der Wertschöpfungskette eines Unternehmens sowie seiner Rechnungswesen-Prozesse. Die unterschiedlichen Informationen werden dabei in eine einheitliche Sprache gebracht (z.B. Kontenbegriff) und bewertet. Hierin bedeutet ein Geschäftsvorfall einen betriebswirtschaftlichen Vorgang, bei dem das Geldvermögen entweder erhöht (Einnahme) oder erniedrigt (Ausgabe) wird. Derartige Geschäftsvorfälle können wiederum bestimmten Klassen zugeordnet werden, innerhalb derer die Daten, die den einzelnen Geschäftsvorfällen zuzuordnen sind, eine näherungsweise einheitliche Struktur haben. Typische Klassen sind z.B. Personalwesen, Materialwirtschaft, Produktion.

Um die Ordnungsmäßigkeit des Rechnungswesen sicherzustellen, muss die Protokollierung vollständig und richtig erfolgen. Das Belegprinzip dient dem Nachweis dieser Ordnungsmäßigkeit. Dabei wird jede Protokollierung eines Geschäftsvorfalls nach einer bestimmten betriebswirtschaftlichen Bewertungsmethode durch einen Beleg dokumentiert, dem ein Identifikationscode zugeordnet ist. Beispiele für die unterschiedliche betriebswirtschaftliche Bewertung können sein: Bewertung eines Geschäftsvorfalls nach dem Deutschen Handelsgesetz oder nach IAS, Bewertung eines Geschäftsvorfalls zwischen zwei Konzerngesellschaften nach den gesetzlichen oder nach konzerninternen Vorschriften, Bewertung eines Geschäftsvorfalls in unterschiedlichen Währungen.

Das zweitgenannte Beispiel sei detaillierter ausgeführt: Gegeben seien zwei Gesellschaften A und B des selben Konzerns. Gesellschaft A verkauft an Gesellschaft B ein Produkt X zum Preis von Y, die Herstellungskosten seien Z. Gemäß den gesetzlichen Regelungen würde dieser Vorfall folgendermaßen verbucht werden: Das Bestandskonto der Firma B für das Produkt X würde im Haben einen Zuwachs von Y erhalten, in der Gewinnund Verlustrechnung würde sich ein Sollbetrag von ebenfalls Y ergeben. Gemäß einer konzerninternen Regelung könnte sich im Bestandskonto von B für das Produkt X ein Zuwachs von Z ergeben. In der GuV wieder ein Soll von Y, jedoch auch ein Haben von Y-Z.

Wird ein bestimmter Geschäftsvorfall mit mehreren, unterschiedlichen betriebswirtschaftlichen Methoden bewertet, fallen entsprechend mehrere, unterschiedliche Belege an. Durch dieses Belegprinzip ist ein Auditing von den aggregierten, d.h. über bestimmte Merkmale aufsummierten Daten der Rechnungen über die Belege zu den Prozessdaten gewährleistet.

Zur Erfüllung der unterschiedlichen Zwecke werden im Rechnungswesen mit betriebswirtschaftlichen Methoden betriebswirtschaftliche Verfahren, die im folgenden auch Geschäftsanwendungen genannt werden, betriebswirtschaftliche Rechnungen (z.B. Ergebnisrechnung, Kostenrechnung, Bilanz, Gewinn- und Verlustrechnung) durchgeführt und verschiedene Bücher geführt (z.B. Hauptbuchhaltung, Anlagenbuchhaltung). Die unterschiedlichen Rechnungen und Bücher haben unterschiedliche Anforderungen an Zeitnähe und Detaillierungsgrad. Dennoch ist eine Abstimmbarkeit zwischen den Rechnungen (Geschäftsanwendungen) von großer Bedeutung für eine Buchführung, die den Grundsätzen für ordnungsgemäße Buchführung durch Software entsprechen soll, und für die Verwendbarkeit der Ergebnisse.

Eine weitere Anforderung an ein Rechnungswesen ist, dass die Beobachtung und Protokollierung die Durchführung der logistischen Prozesse, das sind Buchungsvorgänge, die die Einund Ausgänge von Waren und Dienstleistungen abbilden, möglichst nicht behindert.

Eine ERP Software (Enterprise Resource Planning) erfüllt die Anforderungen an ein Rechnungswesen typischerweise dadurch, dass die logistischen Prozesse und das Rechnungswesen eines Unternehmens im gleichen System, dem ERP System, durchgeführt werden. Das Rechnungswesen ist eng verknüpft mit den logistischen Prozessen und protokolliert unmittelbar und transaktional mit, was bedeutet, dass ein Beleg erst dann als solcher gespeichert wird, wenn die Daten, die der Beleg enthalten muss, vollständig sind. Die logistischen Prozesse sind in der ERP Software abgebildet und daher in der Regel auch mit den Begriffen des Rechnungswesen (z.B. Konto) verknüpft. Die Begriffe sind durch feste Datenstrukturen in die Software implementiert. Die verschiedenen Rechnungen des Rechnungswesen schreiben dabei eigene Belege zur Protokollierung fort.

Dieses Vorgehen hat eine Reihe von Nachteilen:
a) Die Voraussetzung, dass alle logistischen Prozesse innerhalb eines einzigen ERP-Systems laufen, ist in der Regel nicht erfüllt. Viele Unternehmen verfügen über historisch gewachsene heterogene Systemlandschaften, in denen viele Prozesse in Spezialsystemen abgewickelt werden. Für die Protokollierung solcher extern laufenden Prozesse, die meistens die Begriffe des Rechnungswesen nicht kennen, ist das lokale ERP System häufig unzureichend vorbereitet. Umfangreiche Übernahmeprogramme sind daher häufig notwendig.
b) Durch die festen Datenstrukturen des lokalen ERP-Systems sind Unternehmen gezwungen, sich mit ihren betreibswirtschaftlichen Begriffen an die Nomenklatur und die technischen Eigenschaften des lokalen ERP Systems anzupassen. Dies ist insbesondere bei den unter a) dargestellten heterogenen Systemlandschaften ein großes Problem.
c) Die individuelle Belegfortschreibung der verschiedenen Rechnungen in unterschiedlichen Geschäftsanwendungen führt zu einem sehr großen Datenvolumen und Zeitaufwand bei der Fortschreibung. Da die Rechnungen individuell aufgebaut werden, ergeben sich auch erhebliche Abstimmproblematiken zwischen den Rechnungen.
d) Die unmittelbare, transaktionale Fortschreibung des Rechnungswesen belastet die Systemperformance der abgewickelten logistischen Prozesse. Insbesondere blockieren auftretende Fehler bei der Protokollierung ins Rechnungswesen, etwa durch fehlerhafte Systemeinstellung, die Durchführung des Prozesses.

Vor diesem Stand der Technik lag der Erfindung die Aufgabe zugrunde, dass eingangs genannte Verfahren derart zu verbessern, dass die genannten Nachteile zumindest teilweise entfallen.

Diese Aufgabe wird erfindungsgemäß durch ein Verfahren der eingangs genannten Art gelöst, das dadurch gekennzeichnet ist,
- - dass in einem ersten Schritt aus Daten zu einem Geschäftsvorfall mindestens ein Eingangsdatensatz erzeugt wird, der eine Struktur aufweist, welche für eine oder die oder jede unterschiedliche Klasse von Geschäftsvorfällen und eine oder mehrere Geschäftsanwendungen spezifisch ist,
- - dass in einem zweiten Schritt der mindestens eine Eingangsdatensatz in einen Ausgangsdatensatz transformiert wird, der über eine oder mehrere der Geschäftsanwendungen konfiguriert werden kann, und
- - dass in einem dritten Schritt der Ausgangsdatensatz mit zugeordnetem Identifikationscode gespeichert wird, so dass der Ausgangsdatensatz unter Bezugnahme auf den Identifikationscode von den mindestens zwei Geschäftsanwendungen ganz oder teilweise gelesen werden kann.
   Gegenstand der Erfindung ist daher ein Verfahren zur automatischen Ablage von Belegen zu Geschäftsvorfällen, bei dem mit Hilfe eines Computersystems Daten zu einem Geschäftsvorfall für den Zugriff über eine oder mehrere Geschäftsanwendungen gespeichert werden und bei dem einem Geschäftsvorfall ein Identifikationscode zugeordnet wird, wobei in dem Computersystem eine oder mehrere unterschiedliche Klassen von Geschäftsvorfällen mit unterschiedliche Datenstrukturen abgebildet sind, dadurch gekennzeichnet,
- - dass in einem ersten Schritt aus Daten zu einem Geschäftsvorfall mindestens ein Eingangsdatensatz erzeugt wird, der eine Struktur aufweist, welche für eine oder die oder jede unterschiedliche Klasse von Geschäftsvorfällen und eine oder mehrere Geschäftsanwendungen spezifisch ist,
- - dass in einem zweiten Schritt der mindestens eine Eingangsdatensatz in einen Ausgangsdatensatz transformiert wird, der über eine oder mehrere der Geschäftsanwendungen konfiguriert werden kann, und
- - dass in einem dritten Schritt der Ausgangsdatensatz mit zugeordnetem Identifikationscode gespeichert wird, so dass der Ausgangsdatensatz unter Bezugnahme auf den Identifikationscode von den mindestens zwei Geschäftsanwendungen ganz oder teilweise gelesen werden kann.

Gegenstand der Erfindung ist ebenso eine Vorrichtung zur Durchführung dieses Verfahrens entsprechend dem Anspruch 11, bzw. Computerprogramme und Computerprogrammprodukte gemäß den Ansprüchen 12 bzw. 14, sowie eine elektronische Datenstruktur bzw. ein elektronischer Beleg, der nach einem der erfindungsgmäßen Verfahren erhältlich ist oder erhalten wurde. Die Erfindung umfasst weiter Computerprogramme auf oder eingebettet in einen Datenträger, mit dessen Hilfe die Programme in einen Computer geladen und das erfindungsgemäße Verfahren ausgeführt werden kann. Das Programm kann in Form eines Source Codes, eines Object Codes oder eines gemischten Codes, ganz oder teilweise kompiliert vorliegen. Der Datenträger kann jede Einheit oder Vorrichtung sein, die geeignet ist ein Programm zu beinhalten: ROM, z.B. CD-ROM oder ein halbleiter-ROM oder DVD ROM, ein magnetisches Speichermedium, z.B. Floppy Disk oder Hard Disk, ein übertragbarer Träger wie z.B. ein elektrisches oder optisches Signal, das über elektrische oder optische Leitungen, oder über elektromagnetische Wellen wie Radio oder Funkwellen übertragen werden kann, oder ein anderer geeigneter Träger. Wenn das Programm in einem Signal enthalten ist, das über ein Kabel oder ein anderes Mittel oder Medium geleitet wird, kann das Kabel oder das andere Mittel oder Medium den Datenträger darstellen. Alternativ kann das Programm in einen integrierten Schaltkreis eingebettet sein, der zur Ausführung des erfindungsgemäßen Verfahrens vorgesehen ist.

Besondere Ausführungsformen des erfindungsgemäßen Verfahrens bzw. besondere Ausgestaltungen der erfindungsgemäßen Vorrichtungen sind in den jeweiligen Unteransprüchen offenbart. Es können auch einzelne oder mehrere oder beliebige Kombinationen der in den jeweiligen Unteransprüchen einer Kategorie offenbarten Merkmale zusammen mit den Merkmalen des jeweiligen Hauptanspruchs erfinderische Lösungen der der Erfindung zugrunde liegenden Aufgabe darstellen.

Das erfindungsgemäße Verfahren sowie der Programmcode zur Durchführung des Verfahrens wird im folgenden auch als "Accounting Engine" , der Ausgangsdatensatz auch als "Beleg" bezeichnet.

Das erfindungsgemäße Verfahren kann als Werkzeug einer ERP Software für das Rechnungswesens zur elektronischen Belegablage von privatrechtlichen Organisationen oder von Organisationen des öffentlichen Rechtes (zusammen kurz "Firma" genannt) eingesetzt werden. Es wird mit Hilfe eines Computersystems ausgeführt. Ein Computersystem im Sinne der Erfindung kann zum einen lediglich einen Computer (PC, Laptop; incl. üblicher Peripherie) umfassen, zum anderen aus einem Netzwerk von mehreren Computern bestehen. Hierunter ist auch ein Netzwerk zu verstehen, das unter Nutzung des Internets gebildet wird. Vorzugsweise wird die Accounting Engine in einem Computernetzwerk innerhalb einer Firma eingesetzt. In einem derartigen Computersystem einer Firma könne Daten betreffend die einzelnen Geschäftsvorfälle beispielsweise mit einer ERP Software gespeichert werden. Die Accounting Engine als Programm Code bewirkt, wenn sie in dem Computersystem ausgeführt wird, dass aus Daten zu einem einzelnen Geschäftsvorfall (Ausgangsdaten) ein Eingangsdatensatz erzeugt wird, der wiederum in einen Ausgangsdatensatz (Beleg) transformiert wird, der von mehreren Anwendungsprogrammen des Rechnungswesens (Geschäftsanwendungen), die auf dem Computersystem ausgeführt werden, gelesen werden kann und der getrennt von den Ausgangsdaten gespeichert wird. Der Beleg kann über eine oder jede der Geschäftsanwendungen konfiguriert werden, wofür in den Geschäftsanwendungen Abfrageroutinen zur Interaktion mit einem Benutzer vorgesehen sein können. Die Konfigurierbarkeit des Belegs kann beispielsweise dadurch implementiert werden, dass einem Benutzer auf einem Bildschirm eine Liste mit den auswählbaren Daten oder Feldern oder auch Funktionen angezeigt wird, aus denen er mittels einer Interaktion (z.B. Tastatur oder Mausklick oder Spracheingabe) eine oder mehrere Daten, Felder Funktionen auswählen kann, die im Beleg abgespeichert werden sollen (Daten, Felder) oder die bei der Transformation des Eingangsdatensatzes in den Beleg angewandt werden sollen (Funktionen). Vorteilhafterweise ist der Beleg für den Zugriff über mindestens zwei Geschäftsanwendungen ausgebildet.

Das gesamte Verfahren ermöglicht eine redundanzfreie Belegablage mit einer großen Ersparnis an Speicherplatz. Die Ausgangsdaten können bereits in dem Computersystem gespeichert sein oder von einem Benutzer über eine Benutzerschnittstelle eingegeben und unmittelbar weiterverarbeitet werden, oder über eine Datenfernübertragung importiert werden. Bei dem Transformationsvorgang werden die Eingangsdaten unter Benutzung von weiteren Daten, die im Computersystem gespeichert sind, ganz oder teilweise verändert oder ergänzt, je nach den Erfordernissen unterschiedlichen Geschäftsanwendungen. Hierbei kann von einer Geschäftsanwendungen eingestellt werden, auf welche betriebswirtschaftliche Weise ein Geschäftsvorfall bewertet wird. Über eine andere Geschäftsanwendung kann eine andere Bewertung gewählt werden. Dies kann dazu führen, dass ein und derselbe Geschäftsvorfall auf mehrere unterschiedliche Weisen bewertet wird. Für den einen Geschäftsvorfall wird jedoch pro Bewertung nur ein Beleg erzeugt, auf den jedoch mehrere Geschäftsanwendungen lesend zugreifen können. Dieser eine Beleg enthält zwar mehr Daten als erforderlich wäre, wenn nur eine Geschäftsanwendung auf den Beleg zugreifen müsste, insgesamt aber weniger Daten als anfallen würden, wenn für jede der unterschiedlichen Geschäftsanwendungen, die ja nicht immer unterschiedliche Bewertungen vorgeben müssen, ein eigener Beleg erzeugt werden würde. Dies entspricht dem Merkmal "für den Zugriff vom mindestens zwei Geschäftsanmeldungen" ausgebildet zu sein.

In einer bevorzugten Ausführungsform wird der erste Schritt des erfindungsgemäßen Verfahrens mit Hilfe eines ersten Programm-Moduls ausgeführt, der zweite Schritt mit Hilfe eines zweiten Programm-Moduls. Der Eingangsdatensatz mit der spezifischen Struktur wird in diesem Fall von dem ersten Programm-Modul über eine Schnittstelle an das zweite Programm-Modul übergeben. Weiter kann die oder jede Geschäftsanwendung als ein drittes oder weiteres Programm-Modul ausgestaltet sein und mit dem zweiten Programm-Modul so zusammenwirken, dass der Transformationsvorgang im zweiten Schritt des erfindungsgemäßen Verfahrens von dem oder jedem dritten Programm-Modul über eine Schnittstelle einstellbar ist. Besonders bevorzugt ist das zweite Programm-Modul so ausgestaltet, dass es von den mindestens zwei Geschäftsanwendungen auswählbare Daten aus dem Beleg auf eine Datenanfrage von dem oder jedem dritten Programm-Modul lesen und dem oder jedem dritten und/oder einem weiteren Programm-Modul über eine Schnittstelle zur Weiterbearbeitung und/oder zur Anzeige übergeben kann. Diese auswählbaren Daten können von dem dritten oder einem weiteren Programm-Modul ausgewählt werden. Der im zweiten Schritt des erfindungsgemäßen Verfahrens erhaltene Beleg wird vorzugsweise transaktional gespeichert. Vorteilhafterweise weist der Beleg für mehrere Geschäftsanwendungen eine spezifische Datenbankstruktur mit einer oder mehreren Tabellen auf. Besonders vorteilhaft ist es, wenn der Beleg für unterschiedliche Journale des Rechnungswesens unterschiedliche Datenbereiche aufweist. Journale in diesem Sinne sind tabellarische Zusammenfassungen von Buchungssätzen, z.B. aus den die Bereichen Forderungen, Verbindlichkeiten, Kosten, Erträge, Wareineingang, Warenausgang, usw. Beispielsweise kann der Beleg einen ersten Datenbereich für Kosten und Erträge aufweisen, einen zweiten für den Materialbestand, einen dritten für Forderungen und Verbindlichkeiten, usw. In dem ersten Bereich können Angaben enthalten sein zu: Kunde, Produkt, Kostenstelle usw., im zweiten zu Produkt, Lagerart, Lagerort, usw., im dritten zu: Kunde usw. Diese Angaben dienen lediglich der Erläuterung und können je nach Bedarf beliebig verändert oder ergänzt werden. Der Beleg kann zudem einen weiteren Bereich ("Kopfbereich") mit Daten enthalten, die mehreren Journalen gemeinsam sind, z.B.: den Identifikationscode (ID), die jeweilige rechtliche Einheit (Gesellschaft), ein Buchungsdatum, ein Bearbeitungsdatum, ein Bearbeiter, usw. In den unterschiedlichen Datenbereichen können dann diejenigen Informationen aus dem Geschäftsvorfall gespeichert werden, die das jeweilige Journal betreffen. Die Ablage des Belegs in einen physikalischen Speicher kann vorteilhafterweise über eine Datenbankstruktur mit einer oder mehreren Tabellen implementiert werden.

In einer weiteren bevorzugten Ausführungsform wird auf die im Beleg enthaltenen Daten mindestens eine Funktion angewandt. Eine derartige Funktion kann beispielsweise eine Überprüfung des Belegsaldos oder einer im Beleg enthaltenen Kundengruppe sein. Bevorzugt sind derartige Funktionen in einem Programm Modul auswählbar abgelegt. Besonders bevorzugt ist mindestens eine Funktion über ein weiteres Programm Modul konfigurierbar. Die Auswählbarkeit der Funktionen kann beispielsweise dadurch implementiert werden, dass einem Benutzer auf einem Bildschirm eine Liste mit den auswählbaren Funktionen angezeigt wird, aus denen er mittels einer Interaktion (z.B. Tastatur oder Mausklick oder Spracheingabe) eine oder mehrere Funktionen auswählen kann. Es können aber auch Funktionen vorhanden sein, die standardmäßig auf alle Belege angewandt werden. Die Konfigurierbarkeit der mindestens einen Funktion kann dadurch realisiert werden, dass deren Parameter auswählbar sind, z.B. analog dem bereits Beschriebenen. Sind beispielsweise in einem Beleg Buchungen für mehrere rechtliche Einheiten hinterlegt, so kann beispielsweise die Funktion zur Überprüfung des Saldos z.B. per Auswahltabelle so konfiguriert werden, dass sie lediglich die Kontensalden der ausgewählten Einheit überprüft.

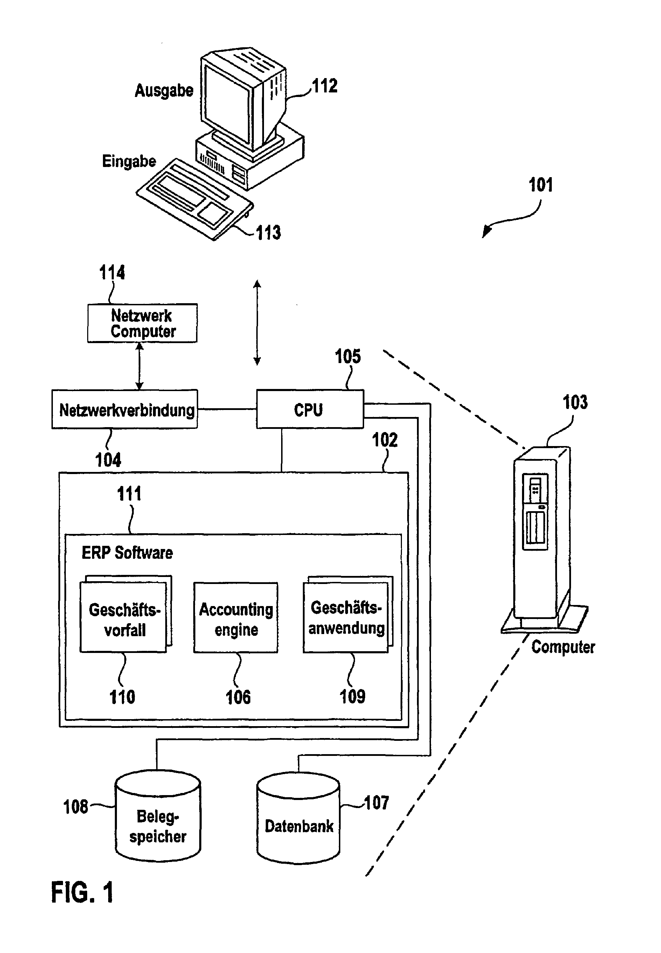

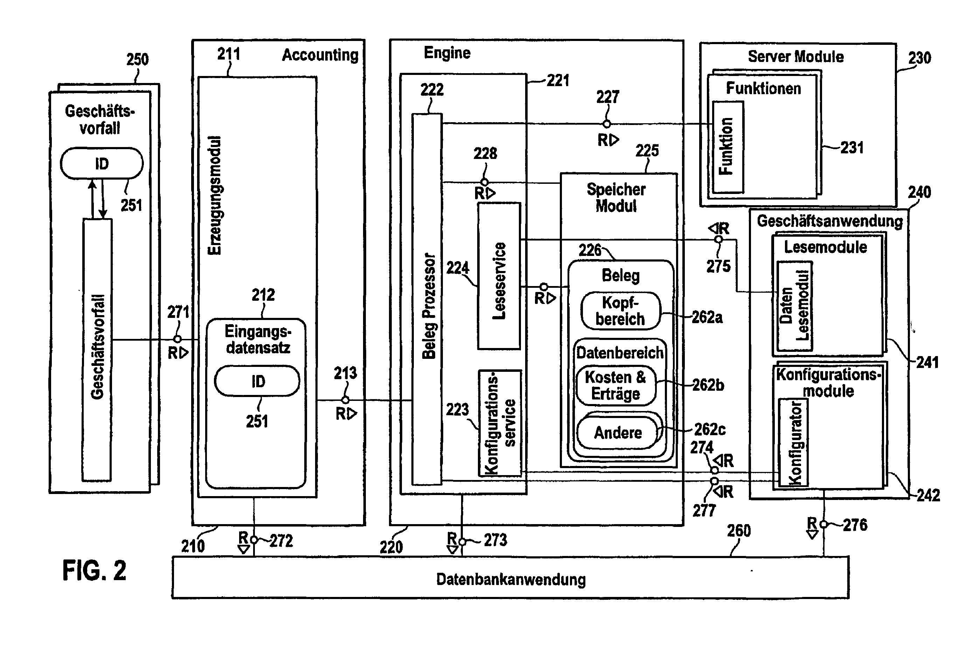

Die Erfindung wird nachfolgend anhand der Figuren 1 und 2 näher erläutert. Eine Beschränkung der Erfindung in irgend einer Weise ist dadurch nicht beabsichtigt.

Es zeigt
- Fig. 1:: eine schematische Darstellung eines Computersystems zur Durchführung des erfindungsgemäßen Verfahrens;
- Fig. 2:: eine beispielhafte Ausführungsform eines Computerprogramms zur Durchführung des Verfahrens anhand eines Blockdiagramms;
- Fig. 3:: eine schematische Darstellung der Datenstruktur eines Belegs mit Datenquellen und Zugriffen von Geschäftsanwendungen;
- Fig. 4:: eine schematische Darstellung beispielhafter Strukturen und Inhalte von Eingangsdatensatz und Beleg anhand eines Beispiels aus dem Warenkauf;
- Fig. 5:: eine schematische Darstellung beispielhafter Strukturen und Inhalte von Eingangsdatensatz und Beleg anhand eines Beispiels aus dem Warenverkauf.

Fig. 1 zeigt ein Computersystem 101 mit einem Computer 103, der eine CPU 105, und einem Arbeitsspeicher 102, in dem eine ERP-Software 111 zur Ausführung durch die CPU 105 geladen ist.

Die ERP Software 111 umfasst ein oder mehrere Programm Module 110 zur Behandlung und Bearbeitung von Daten zu Geschäftsvorfällen, eine als Programm Modul ausgeführte Accounting Engine 106 und ein oder mehrere als Programm Module 109 ausgeführte Geschäftsanwendungen. Das Computersystem 101 umfasst weiter: Eingabemittel 113, Ausgabemittel 112, eine Netzwerkverbindung 104 zum Verbinden des Computers 103 mit weiteren gleichen oder unterschiedlichen Computern 114 in Form eines Netzwerkes, wobei die Netzwerkcomputer 114 als weitere Ein- und/oder Ausgabeeinheiten zur Eingabe und/oder Ausgabe von Daten zu Geschäftsvorfällen bzw. zur Konfiguration der Accounting Engine und zur Darstellung von Eingabemasken oder zur Ausgabe von Ergebnissen oder zur Ausführung der Accounting Engine dienen können, eine Datenbank 107, die Daten zu den Geschäftsvorfällen und Geschäftsanwendungen enthält und auf die die ERP Software 111 zugreifen kann, sowie eine Speichereinheit 108 zur Speicherung der Belege, wobei die Speichereinheit 108 auch Teil der Datenbank 107 sein kann. Die Programm Module 106, 109, 110 können ebenfalls auf die Datenbank 107 zugreifen, die Programm Module 106 und 109 zusätzlich noch auf den Belegspeicher 108.

Mit einem derartigen Computersystem kann das erfindungsgemäße Verfahren folgendermaßen ausgeführt werden. Eines der Module 110 übergibt Daten zu einem bestimmten Geschäftsvorfall mit einem Identifikationscode (ID) an die Accounting Engine 106. Dabei können die Daten bereits in der Datenbank 107 vorhanden sein oder über die Ein- bzw. Ausgabemittel 113, 112, 114 eingegeben worden und im Arbeitsspeicher 102 gespeichert sein. Die Accounting Engine 106 transformiert die übergebenen Daten unter Hinzufügung von Daten aus der Datenbank 107 und/oder unter Veränderung oder Umwandlung der übergebenen Daten in einen Beleg, der den Anforderungen eines betriebswirtschaftlichen Beleges genügt, und der von den unterschiedlichen Geschäftsanwendungen 109 gelesen werden kann. Anschließend wird der Beleg auf der Speichereinheit 108 gespeichert. Zur Durchführung der Transformation enthält die Datenbank 107 alle betriebswirtschaftlich relevanten Informationen. Die Art der Transformation und die Art der Daten, die im Beleg gespeichert werden kann über die Module 109 jeweils spezifisch eingestellt werden.

Bezugnehmend auf Fig. 2 wird nun eine weitere Ausführungsform der Accounting Engine näher beschrieben. Hierin repräsentieren die eckigen Rechtecke Programm-Code, die gerundeten Rechtecke Datenstrukturen. Die Accounting Engine gemäß Fig. 2 weist ein erstes Programm-Modul 210 und ein zweites Programm-Modul 220 auf. Das erste Programm-Modul 210 erhält aus einem Geschäftsvorfall über ein Programm Modul 250, welches für eine Klasse von Geschäftsvorfällen spezifisch ausgebildet ist, Daten zu diesem Geschäftsvorfall über eine Schnittstelle 271. Solche Daten können beispielsweise sein: Art, Anzahl, Typ eines verkauften Produktes oder , als Beispiel aus der Fertigung, die Entnahme einer Anzahl einer Ware oder eines Rohstoffs aus einem Lager für eine bestimmten Arbeitsplatz einer bestimmten Fertigung oder die Gehaltszahlung an einen Angestellten. Diese Daten können über Speichermedien geladen oder über Eingabemittel (z. B. Tastatur, Bildschirm) quasi online eingegeben werden. Die Übergabe der Daten kann beispielsweise auch durch Übergabe der Adressen der betreffenden Daten geschehen. Zusätzlich wird ein Identifikationscode 251 (ID) mit übergeben. Das erste Programm-Modul 210 enthält ein oder mehrere Erzeugungsmodule 211, die aus den Daten des Geschäftsvorfalls einen Eingangsdatensatz 212 erzeugen, der eine Struktur aufweist, welche für sämtliche Klassen von Geschäftsvorfällen, die in der jeweiligen ERP Software abgebildet sind, spezifisch ist. Das Erzeugungsmodul 211 ist ebenfalls für jede Klasse von Geschäftsvorfällen 250 spezifisch ausgebildet. Die Zuordnung der Module 250 zu den Modulen 211 kann beispielsweise über eine Tabelle implementiert werden. Der Eingangsdatensatz 212 kann in seiner Struktur einen Kopfbereich aufweisen, in dem allgemeine Daten wie die ID 251, Konto, Kostenstelle, Benutzer, Zeitstempel, Buchungsdatum, rechtliche Einheit etc. sowie Daten betreffend die Klasse des Geschäftsvorfalls enthalten sind. Der übrige Teil der Struktur enthält die Daten, die den jeweiligen konkreten Geschäftsvorfall betreffen. Die allgemeinen Daten können zum Teil auch mittels einer Datenbankanwendung 260 aus einer Datenbank über eine Schnittstelle 272 gelesen werden. Die Konfiguration der Module 211, deren Zuordnung zu den Modulen 250 und die Festlegung der Struktur des Eingangsdatensatzes 212 erfolgt zweckmäßigerweise bei der Installation der Accounting Engine im EDV-System der jeweiligen Firma.

Der so erzeugte Eingangsdatensatz 212 wird von dem ersten Programm-Modul 210 über eine Schnittstelle 213 an das zweite Programm-Modul 220 übergeben. Dieses enthält ein Transformationsmodul 221, in welchem ein Beleg-Prozessor 222 den Eingangsdatensatz 212 in einen Ausgangsdatensatz (Beleg) 226 transformiert, dessen Struktur so spezifisch gestaltet ist, dass auf ihn von mindestens zwei Geschäftsanwendungen aus zugegriffen werden kann. Mit dieser Transformation werden die im Eingangsdatensatz 212 enthaltenen Daten des Geschäftsvorfalls in die entsprechenden Daten für das Rechnungswesen umgewandelt. Diese Transformation erfolgt unter Hinzufügung von Daten und/oder unter Umwandlung von Daten aus dem Eingangsdatensatz. Die Hinzufügung erfolgt mittels der Datenbankanwendung 260, auf die der Beleg-Prozessor über eine Schnittstelle 273 zugreifen kann. Beispiele für solche hinzugefügte Daten sind eine Kundengruppe oder ein Preis. Eine Umwandlung von Daten kann beispielsweise derart durchgeführt werden, dass aus einer übergebenen Stückzahl und aus dem Stückpreis, der aus der Datenbankanwendung 260 erhältlich ist, ein Umsatz berechnet und wird. Dieser kann dann in einem weiteren Schritt für den Zugriff von unterschiedlichen Geschäftsanwendungen im Beleg 226 gespeichert werden.

Unterschiedliche Geschäftsanwendungen sind beispielsweise Anwendungen des Rechnungswesens wie Ergebnisrechnung, Kostenrechnung, Bilanz, Gewinn- und Verlustrechnung, oder Anwendungen des Controllings. Zur Erfüllung der Erfordernis der Zugreifbarkeit von mindestens zwei Geschäftsanwendungen weist der Beleg 226 einen Kopfbereich 226a sowie unterschiedliche, inhaltlich gegliederte Datenbereiche 226b, 226c auf, die zum Lesezugriff für einzelne oder mehrere Geschäftsanwendungen vorgesehen sind. Der Kopfbereich enthält die allgemeinen Daten des Eingangsdatensatzes 212 sowie die vom Belegprozessor 221 hinzugefügten Daten aus der Datenbankanwendung 260. Die unterschiedlichen Datenbereiche 226b, 226c enthalten die Daten für die einzelnen Journale des Rechnungswesens. Beispielsweise steht der Bereich 262b für das Journal Kosten und Erträge. Welche Daten der einzelnen Bereiche 226 von welchen Geschäftsanwendungen aus eingesehen werden können, ist von der jeweiligen Geschäftsanwendung aus konfigurierbar. Dies wird im folgenden näher erläutert.

Eine Geschäftsanwendung ist im Beispiel gemäß Fig. 2 in Form eines dritten Programm-Moduls 240 ausgestaltet. Dieses dritte Programm-Modul 240 enthält ein Konfigurationsmodul 242 das mit einem Konfigurationsservice 223 des Transformationsmoduls über eine Schnittstelle 274 derart zusammenwirkt, dass mit Hilfe des Konfigurationsmoduls 242 bestimmbar ist, welche Daten zum Zugriff für eine bestimmte Geschäftsanwendung in den betreffenden Datenbereich (226a oder 226 b) des Belegs 226 geschrieben werden und auch von dem jeweiligen dritten Programm-Modul 240 gelesen werden können. Die zur Transformation erforderlichen Daten können in einer Datenbank in Tabellenform abgelegt sein. Die Namen der entsprechenden Felder der Tabelle können über eine Schnittstelle 276 mittels der Datenbankanwendung 260 ausgewählt werden. Die Namen der ausgewählten Felder werden dem Konfigurationsservice 223 über eine Schnittstelle 274 übergeben. Die Inhalte (Daten) der so ausgewählten Felder werden dann von dem Transformationsmodul 221 über die Schnittstelle 273 aus der Datenbankanwendung 260 gelesen, und über den Beleg Prozessor 222 in den Beleg eingefügt bzw. zur Transformation verwendet. Weiter kann mit Hilfe des Konfigurationsmoduls 242 bestimmt werden, welche betriebswirtschaftliche Bewertung des Eingangsdatensatzes vorgenommen werden soll und welche der erhaltenen Ergebnisse im Beleg gespeichert werden sollen, z.B. welche Währung für eine bestimmte Art der Buchung verwendet werden soll.

Ist der Eingangsdatensatz 212 in den Belegdatensatz 226 transformiert, so können mittels eines Server Moduls 230 eine oder mehrere Funktionen 231 auf den Belegdatensatz 226 angewandt werden. Beispielsweise kann mit einer oder mehreren Funktionen 231 überprüft werden, ob der Saldo aus Soll und Haben gleich Null ist, ob angegebene Steuersätze korrekt sind, ob alle obligatorischen Felder ausgefüllt sind, Kontenangaben zutreffen, ob eine Kundengruppe richtig bestimmt ist oder ob sonstige Fehler oder mangelnde Übereinstimmung mit den Grundsätzen ordnungsgemäßer Buchführung vorhanden sind. Diese Funktionen 231 sind in dem Service Modul 230 abgelegt und können über Schnittstellen 277, 227 über das Konfigurationsmodul 242 zur Anwendung auf den betreffenden Beleg und für die betreffende Geschäftsanwendung ausgewählt werden.

Der Beleg 226 mit seinen Strukturdaten, dem Identifikationscode 251 sowie den von den dritten Programm-Modulen 240, 242 konfigurierten Einstellungen wird von einem Persistency-Server-Modul 225 gespeichert. Die Ablage in einen physikalischen Speicher erfolgt in Form einer Datenbankstruktur mit einer oder mehreren Tabellen. Der Beleg-Prozessor 222 kann über eine Schnittstelle 228 auf die Strukturdaten zugreifen und diese zur Transformation eines Eingangsdatensatzes 212 in einen Beleg 226 einer bestimmten Klasse von Geschäftsvorfällen verwenden. Die Schnittstellen 271, 213 sind für jede Klasse von Geschäftsvorfällen spezifisch ausgebildet.

Zum Lesen der Daten enthält das oder jedes dritte Programm-Modul 240 ein Lesemodul 241, welches mit einem Leseservice Modul 224 über eine Schnittstelle 275 zusammenwirkt, wobei der Leseservice 224 dem Lesemodul 241 die Daten zur Verfügung stellt, die mit Hilfe Konfigurationsmoduls 242 ausgewählt wurden. Über das Konfigurationsmodul 242 kann in der oben angegebenen Weise ebenfalls eingestellt werden, welche allgemeine Daten bzw. Felder mit Hilfe der Datenbankanwendung 260 dem Beleg hinzugefügt werden und auch gelesen werden können.

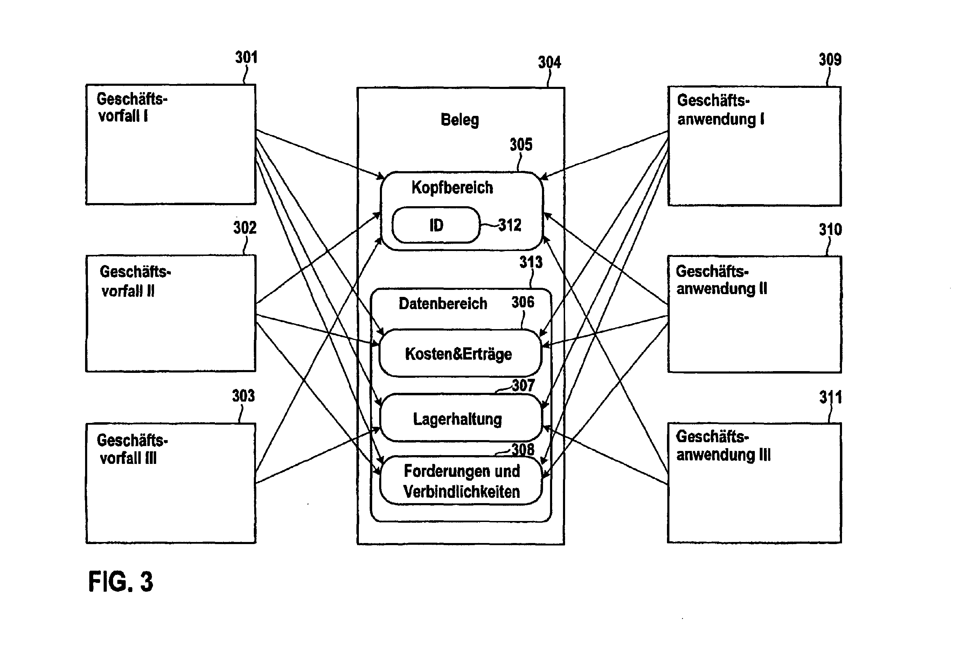

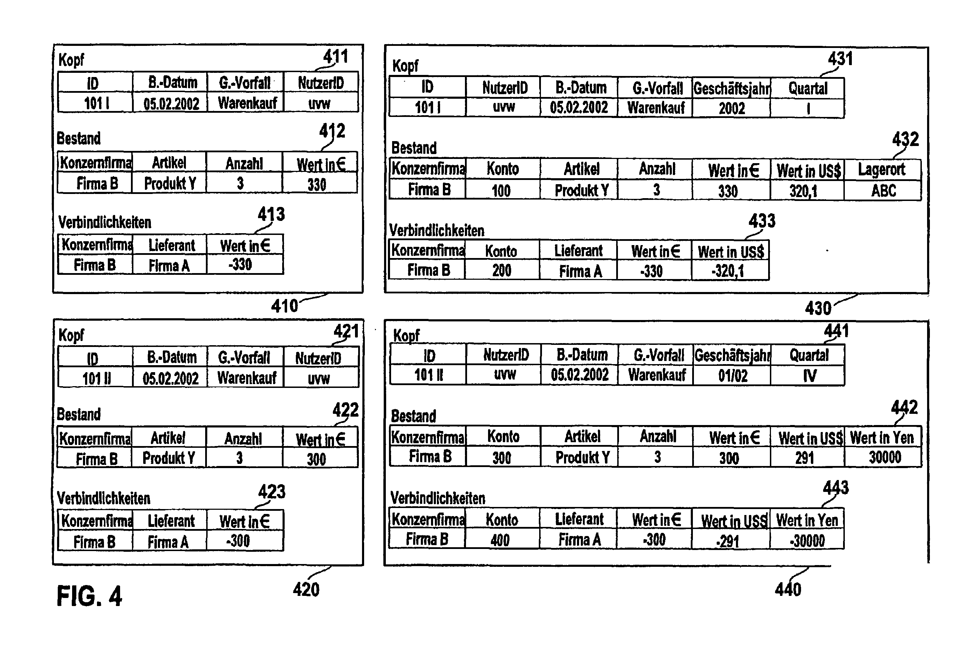

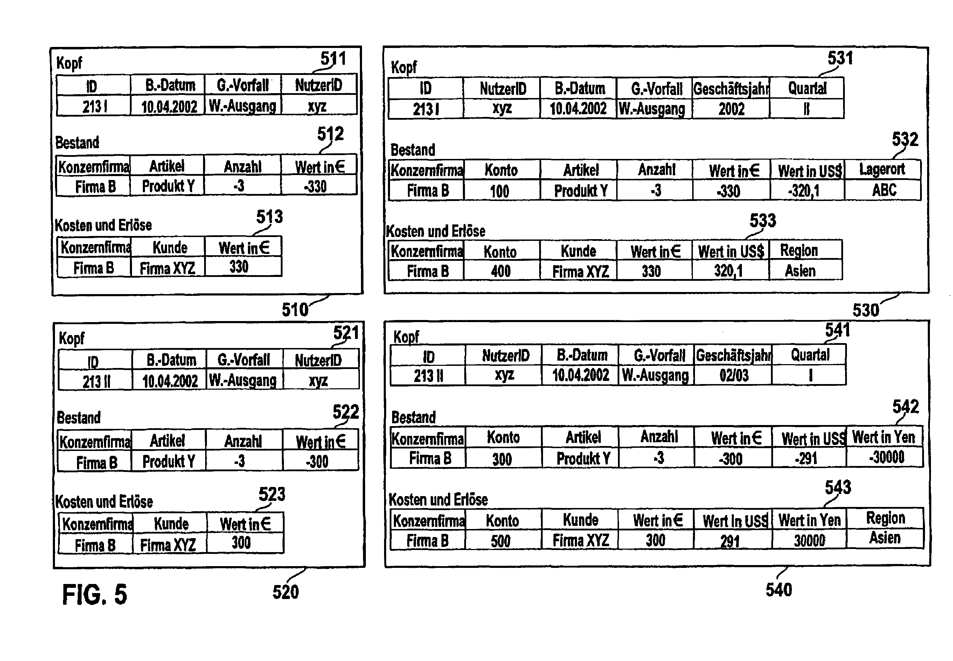

Eine weitere Erläuterung der Erfindung sei anhand von Fig. 3 vorgenommen. Die Figur zeigt eine schematische Darstellung der Datenstruktur eines Belegs 304 zusammen mit Hinweisen, welche Möglichkeiten bestehen, Daten von Geschäftsvorfällen 301, 302, 303 in bestimmte Datenbereiche 306, 307, 308 des Belegs 304 zu transformieren. Ebenso ist dargestellt, welche Möglichkeiten des Zugriffs von Geschäftsanwendungen 309, 310, 311 auf die Datenbereiche 306, 307, 308 des Belegs 304 bestehen. Die genannten Möglichkeiten sind jedoch keinesfalls als eine abschließende Aufzählung zu verstehen, sondern stellen lediglich beispielhafte Ausführungsformen der Erfindung dar. Der elektronische Beleg 304 weist einen Kopfbereich 305 und einen Datenbereich 313 auf. Der Kopfbereich 305 enthält die ID 312 sowie andere allgemeine Daten betreffend einen Geschäftsvorfall 301, 302, 303. Es sei hier betont, dass für jeden der Geschäftsvorfälle 301, 302, 303 ein eigener Beleg erstellt wird. Diese drei eigenen Belege sind jedoch zur einfacheren zeichnerischen Darstellung in dem Beleg 304 zusammengefasst. Der Datenbereich 313 weist unterschiedliche Bereiche 306, 307, 308 auf, in denen Daten zu unterschiedlichen Journalen des Rechnungswesens enthalten sind: einen Bereich 306 für Daten zu Kosten und Erträge, einen Bereich 307 zur Lagerhaltung sowie einen Bereich 308 zu Forderungen und Verbindlichkeiten. Für einen Geschäftsvorfall 301 kann es sich generell aber auch ergeben, dass Daten für den Kopfbereich und für alle möglichen Kombinationen von Journalbereichen wie den Bereichen 306, 307, 308 und weiteren anfallen. Dies wird unter Bezugnahme auf die Figuren 4 und 5 im folgenden weiter erläutert. Eine Beschränkung in irgend einer Weise ist hierdurch nicht beabsichtigt. Entgegen den Fig. 1-3 sind in den Fig. 4, 5 Datenstrukturen nicht gerundet gekennzeichnet, keine Programmmodule eingezeichnet sind.

Gegeben sei ein Konzern mit Sitz in Japan, einer Tochterfirma A in USA und einer Tochterfirma B in Europa. Als ein erster Geschäftsvorfall sei angenommen B kaufe von A 3 Stück eines Produktes Y zu einem Stückpreis von 110 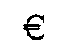 . Die Herstellungskosten bei A seien 100 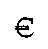 /Stück, der Verkaufsaufschlag sei 10%. Der Vorfall sei vom Rechnungswesen der Firma B betrachtet und aus zwei unterschiedlichen Sichten bewertet, und zwar aus Sicht der Firma B (Geschäftsanwendung I, GA I) und aus Konzernsicht (Geschäftsanwendung II, GA II). Aus betriebswirtschaftlicher Sicht wird bei der Firma B der Warenbestand erhöht und es entsteht eine Verbindlichkeit in Höhe des Kaufpreises.

Über das Programmmodul 250 (vgl. Fig. 2) werden dem ersten Modul 210 zu diesem Geschäftsvorfall folgende Daten übergeben: Eine ID (101), ein Bestelldatum (05.02.2002), eine Bezeichnung des Geschäftsvorfalls, (Warenkauf), Artikelbezeichnung (Produkt Y), Stückzahl (3) und Kaufpreis (330). Das Programm Modul 210 erzeugt aus diesen Daten zwei Eingangsdatensätze 410, 420, die für diese Klasse von Geschäftsvorfällen spezifisch sind: einen ersten 410 für die GA I und einen zweiten 420 für die GA II. Beide haben die gleiche Struktur: je einen Kopfbereich 411, 421 und je einen Datenbereich, wobei letzterer aus den Journalen Bestand 412, 422 und Verbindlichkeiten 413, 423 besteht. Sämtliche Bereiche sind als einzeilige Tabellen implementiert. Der Kopfbereich hat-im Beispiel - die Felder mit Namen ID, Buchungsdatum, Geschäftsvorfall, in denen die entsprechenden übergebenen Daten eingetragen sind, wobei vom Modul 210 aus der übergebenen ID eine ID erzeugt wird, die die beiden Eingangsdatensätze eindeutig kennzeichnet, und zwar im Beispiel durch Hinzufügung von "I" bzw. "II", entsprechend der GA. Zusätzlich ist vom Modul 210 noch ein Feld NutzerID hinzugefügt, in dem eine Kennung des betreffenden Sachbearbeiters eingetragen ist. Die wurde aus der Datenbankanwendung 260 entnommen. Der Datenbereich Bestand 412 weist die Felder Konzernfirma, Artikel, Anzahl, Wert in 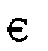 auf, wobei hier das Feld Konzernfirma aus der Datenbank gefüllt wird, die übrigen aus den übergebenen Daten. Der Inhalt des Feldes Wert in 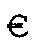 entspricht dem Kaufpreis. Hierzu ist anzumerken, dass Sollbuchungen als positive Zahlen erscheinen, Habenbuchungen als negative. Der Bereiche Verbindlichkeiten 413 weist die Felder Konzernfirma, Lieferant und Wert in 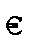 auf, wobei die beiden erstgenannten Felder mit Werten aus der Datenbankanwendung 260 enthalten.

Der Eingangsdatensatz 420 für die GA II unterscheidet sich von dem Eingangsdatensatz 410 für die GA II nicht im strukturellen Aufbau sondern lediglich im Inhalt der Felder Wert in 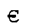 . Dies liegt daran, dass für die Bewertung aus Konzernsicht der Verkaufsaufschlag nicht relevant ist, und deshalb das Modul 210 zur Erzeugung des Eingangsdatensatzes für diese GA II so konfiguriert wurde, daß es mittels der Datenbankanwendung 260 den Wert für die Herstellungskosten aus einer konzernweit zugänglichen Datenbank liest und in die Felder Wert in 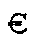 der Bestandszeile 422 und Verbindlichkeiten 423 einträgt.

Das Transformationsmodul 221 erzeugt aus dem ersten Eingangsdatensatz 410 einen ersten Beleg 430 und aus dem zweiten Eingangsdatensatz 420 einen beleg 440. Beide Belege haben unterschiedliche Datenstruktur, die aus der Struktur der Eingangsdatensätze unter Ergänzung bzw. Weglassung einzelner oder mehrerer Felder entstand. Es sind vorhanden Kopfbereiche 431, 441, sowie die Datenbereiche Bestand 432, 442 und Verbindlichkeiten 433, 443.

Die Kopfbereiche 431, 441 haben die gleiche Struktur, jedoch in einzelnen Feldern unterschiedlichen Inhalt. Sie enthalten die Felder des Kopfbereiches des Eingangsdatensatzes sowie zusätzliche Felder für Geschäftsjahr und Quartal. Aus der Sicht der europäischen Firma B ist das Geschäftsjahr gleich dem Kalenderjahr. Das Modul 221 ermittelt aus der Kenntnis der Firma und des Buchungsdatums als Geschäftsjahr das Jahr 2002 und als Quartal das erste Quartal und speichert diese Werte in die entsprechenden Felder.

Die Bestandsbereiche 432 und 442 haben unterschiedliche Struktur. Der Bereich 432 hat die Felder entsprechend 412 sowie Felder für Konto, Wert in US$ und Lagerort. Konto und Lagerort werden vom Modul 221 aus der Datenbankanwendung 260 ermittelt, der Wert in US$ aus dem Wert in 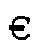 unter Verwendung eines Umrechnungsfaktors aus der Datenbankanwendung 260. Ein "Wert in US$" kann nützlich sein, wenn der Verkäufer - wie im Beispiel - Sitz in USA hat. Der Bestandsbereich 442 hat nahezu die gleiche Struktur, jedoch ist statt dem Feld Lagerort ein Feld Wert in Yen vorhanden. Dies kann sinnvoll sein, wenn der Konzern Sitz in Japan hat und nach japanischen Vorschriften bilanzieren muss, und wenn eine Information betreffend den Lagerort aus Konzernsicht nicht relevant ist.

Die Bereiche Verbindlichkeiten 433 und 443 haben ebenfalls unterschiedliche Struktur. Bereich 433 enthält zusätzlich zu den Feldern entsprechend 413 noch die Felder Konto und Wert in US$, deren Inhalt analog dem oben Beschriebenen ermittelt wird. Das gleiche gilt für den Bereich 443, der jedoch noch ein Feld Wert in Yen enthält.

Als weiteres Beispiel eines Geschäftsvorfalls sei der Verkauf der genannten Ware von B an einen außereuropäischen Dritten (Firma XYZ) herangezogen, und zwar lediglich die Abgabe der Ware. Die Faktura wird nicht behandelt. Aus betriebswirtschaftlicher Sicht wird hier bei der Firma B der Warenbestand erniedrigt und es entstehen Kosten in Höhe des Herstellungspreises.

Über das Programmmodul 250 (vgl. Fig. 2) werden dem ersten Modul 210 zu diesem Geschäftsvorfall folgende Daten übergeben: Eine ID (213), ein Bestelldatum (10.04.2002), eine Bezeichnung des Geschäftsvorfalls, (Warenausgang), Artikelbezeichnung (Produkt Y), Stückzahl (3). Analog dem obigen Beispiel werden zwei Ausgangsdatensätze 510, 520 für die GA I und GA II erzeugt, und aus diesen zwei Belege 530, 540, wobei die übrigen, erforderlichen Daten über die Datenbankanwendung 260 ermittelt werden. Die Kopfbereiche 511, 521, 531, 541 entsprechen denen des vorgenannten Beispiels. Lediglich die Inhalte sind angepasst. Das gleiche gilt für die Bestandsbereiche 512, 522, 532, 542. Ein Bereich Verbindlichkeiten ist für diese Klasse von Geschäftsvorfällen nicht erforderlich. Stattdessen sind in den Datenbereichen Journale Kosten und Erlöse 513, 523, 533, 543 vorhanden. Diese bestehen für die Eingangsdatensätze 510, 520 aus den Feldern Konzernfirma, Kunde (die Drittfirma) und Wert in 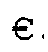 . Für den Beleg 530 sind noch Felder Wert in US$ und Region hinzugefügt, für den Beleg 540 zudem noch Wert in Yen. Die Inhalte ergeben sich aus dem bereits Gesagten und den Daten des zweiten Beispiels. Es sei an dieser Stelle darauf hingewiesen, dass die Inhalte der Konto Felder für den Bereich Bestand in den Beispielen innerhalb einer GA identisch sind aber von GA I zu GA II unterschiedlich. Dies muss jedoch nicht generell so sein.

Die vier Belege werden gespeichert und können jeweils von mehreren Geschäftsanwendungen 240 gelesen werden, z.B. von Anwendungen des Bestandscontrollings, der Deckungsbeitragsrechnung oder der allgemeinen Bilanzrechnung. Erfindungsgemäß ist einstellbar, welche Felder von welchen Geschäftsanwendungen gelesen werden können. So kann eine Anwendung des Bestandscontrollings Zugriff haben auf alle oder einzelne Felder der Kopfbereiche und der Bestandsbereiche. Diese Konfiguration geschieht zweckmäßigerweise bei der Einrichtung der Software.

Die Accounting Engine stellt in einer ERP-software eine zentrale Komponente zur integrierten Protokollierung von Geschäftsvorfällen in Form eines Einzelnachweises mittels des Belegs dar. Auf die Einzelnachweise können eine oder mehrere Geschäftsanwendungen spezifische, aggregierte Sichten bilden. Die Belege können für eine bestimmte betriebswirtschaftliche Bewertung redundanzfrei abgelegt werden, wodurch Speicherplatz in erheblichem Umfang, je nach Anzahl der Belege und Geschäftsanwendungen, eingespart werden kann, obwohl der Bedarf an Speicherplatz für den einzelnen Beleg steigt. Ausserdem wird der Abstimmungsaufwand zwischen den Geschäftsanwendungen des Anwenders reduziert. Belegstruktur und der Verfahrensablauf kann von Anwender konfiguriert werden.

Mit der Verwendung der Accounting Engine im Rechnungswesen kann in einem Unternehmen zusätzlicher betriebswirtschaftlicher Nutzen generiert werden, da die Accounting Engine als alleinige Schnittstelle zwischen allen operativen Geschäftsvorfällen und rechnungswesen-internen Geschäftsanwendungen einsetzbar ist, und die erstellten Belege in einer zentralen Ablage dokumentiert. Über den mit abgespeicherten Identifikationscode ist sowohl eine eindeutige Auditierung als auch ein Storno von Geschäftsvorfällen möglich. Nutzen mehrere Geschäftsanwendungen den Belegspeicher der Accounting Engine, so kann aus den unterschiedlichen Geschäftsanwendungen heraus ein gemeinsamer, konsistenter Beleg konfiguriert werden. Dies führt zu einer inhärenten Abstimmung der beteiligten Geschäftsanwendungen.

Die Accounting Engine erlaubt in einem ERP-Software System die Trennung der operativen Geschäftsvorfälle von den Anwendungen des Rechnungswesens. Durch eine derartige Trennung wird datentechnisch eine asynchrone Kopplung des Rechnungswesens an logistische Systeme ermöglicht.

Die Accounting Engine ermöglicht es außerdem, betriebswirtschaftlich unbewertete Geschäftsvorfälle, z.B. eine Warenentnahme ohne Preisangabe, mit ihren prozessspezifischen Begriffen zu übernehmen. Sie kann die Bewertung von eingehenden Geschäftsvorfällen nach den Vorschriften des Rechnungswesens durchführen. Belege aus unterschiedlichen Bewertungen können logisch getrennt gehalten werden. Vorzugsweise wird pro Bewertung ein eigenständiger Beleg erzeugt.

Die mit der Anmeldung eingereichten Patentansprüche sind Formulierungsvorschläge ohne Präjudiz für die Erzielung weitergehenden Patentschutzes. Die Anmelderin behält sich vor, noch weitere, bisher nur in der Beschreibung offenbarte Merkmalskombinationen oder andere beliebige Kombinationen von in der Beschreibung offenbarten Merkmalen zu beanspruchen. Ausrücke in den Ansprüchen, die in Klammern gesetzt sind, stellen keine beschränkenden Merkmale dar.

In Unteransprüchen verwendete Rückbeziehungen weisen auf die weitere Ausbildung des Gegenstandes des Hauptanspruches hin; sie sind nicht als ein Verzicht auf die Erzielung eines selbständigen, gegenständlichen Schutzes für die Merkmalskombination der rückbezogenen Unteransprüche zu verstehen.

Es sei angemerkt, dass bei Verknüpfungen von Merkmalen durch "oder" dieses "oder" jeweils einerseits als mathematisches "oder" und andererseits als die jeweils andere Möglichkeit ausschließendes "oder" zu verstehen ist.

Es sei ferner darauf hingewiesen, dass die Ausführungen zu allen bekannten Anordnungen, die sich nicht auf bestimmte Druckschriften beziehen, in erster Linie dem Anmelder bzw. dem Erfinder bekannt sind, so dass sich der Anmelder bzw. Erfinder Schutz für diese vorbehält, sofern sie nicht auch der Öffentlichkeit bekannt sind.

## Patentansprüche

1. Verfahren zur automatischen Ablage von Belegen zu Geschäftsvorfällen, bei dem mit Hilfe eines Computersystems Daten zu einem Geschäftsvorfall für den Zugriff über eine oder mehrere Geschäftsanwendungen gespeichert werden und bei dem einem Geschäftsvorfall ein Identifikationscode zugeordnet wird, wobei in dem Computersystem eine oder mehrere unterschiedliche Klassen von Geschäftsvorfällen mit unterschiedliche Datenstrukturen abgebildet sind, **dadurch gekennzeichnet,**
- - **dass** in einem ersten Schritt aus Daten zu einem Geschäftsvorfall mindestens ein Eingangsdatensatz erzeugt wird, der eine Struktur aufweist, welche für eine oder die oder jede unterschiedliche Klasse von Geschäftsvorfällen und eine oder mehrere Geschäftsanwendungen spezifisch ist,
- - **dass** in einem zweiten Schritt der mindestens eine Eingangsdatensatz in einen Ausgangsdatensatz transformiert wird, der über eine oder mehrere der Geschäftsanwendungen konfiguriert werden kann, und
- - **dass** in einem dritten Schritt der Ausgangsdatensatz mit zugeordnetem Identifikationscode gespeichert wird, so dass der Ausgangsdatensatz unter Bezugnahme auf den Identifikationscode von den mindestens zwei Geschäftsanwendungen ganz oder teilweise gelesen werden kann.

2. Verfahren nach Anspruch 1, wobei der erste Schritt mit Hilfe eines ersten Programm-Moduls ausgeführt wird, der zweite Schritt mit Hilfe eines zweiten Programm-Moduls, und wobei der Eingangsdatensatz mit der spezifischen Struktur von dem ersten Programm-Modul über eine Schnittstelle an das zweite Programm-Modul übergeben wird.

3. Verfahren nach Anspruch 1 oder 2, wobei die oder jede Geschäftsanwendung als ein drittes oder weiteres Programm-Modul ausgestaltet ist.

4. Verfahren nach Anspruch 3, wobei das zweite Programm-Modul so ausgestaltet ist, dass der Transformationsvorgang im zweiten Schritt von dem oder jedem dritten Programm-Modul über eine Schnittstelle einstellbar ist.

5. Verfahren nach Anspruch 3 oder 4 wobei das zweite Programm-Modul so ausgestaltet ist, dass es Daten, die über die mindestens zwei Geschäftsanwendungen auswählbar sind, aus dem Ausgangsdatensatz auf eine Datenanfrage von dem oder jedem dritten Programm-Modul lesen und dem oder jedem dritten und/oder einem weiteren Programm-Modul über eine Schnittstelle zur Weiterbearbeitung und/oder zur Anzeige übergeben kann.

6. Verfahren nach Anspruch 5, wobei die auswählbaren Daten von dem dritten Programm-Modul auswählbar sind.

7. Verfahren nach einem oder mehreren der Ansprüche 1 bis 6, wobei der Ausgangsdatensatz transaktional gespeichert wird.

8. Verfahren nach einem oder mehreren der Ansprüche 1 bis 7, wobei der Ausgangsdatensatz für mehrere Geschäftsanwendungen eine spezifische Datenbankstruktur mit einer oder mehreren Tabellen aufweist.

9. Verfahren nach einem oder mehreren der Ansprüche 1 bis 8, wobei der Ausgangsdatensatz für unterschiedliche Journale des Rechnungswesens unterschiedliche Datenbereiche aufweist.

10. Verfahren nach einem oder mehreren der Ansprüche 1 bis 9, wobei der Ausgangsdatensatz für den Zugriff über mindestens zwei Geschäftsanwendungen ausgebildet ist.

11. Computersystem zur Durchführung eines Verfahrens nach einem oder mehreren der vorstehenden Ansprüche, aufweisend
- Mittel zur Speicherung von Daten zu Geschäftsvorfällen,
- Mittel zur Speicherung von Programmen,
- Mittel zur Ausführung von Programmen,
- Programmcode-Mittel zur Ausführung eines Verfahrens nach einem oder mehreren der vorstehenden Ansprüche.

12. Computerprogramm mit Programmcode-Mitteln, um alle Schritte von einem beliebigen Verfahren gemäß einer beliebigen Kombination der Ansprüche 1 bis 9 auszuführen, wenn das Programm auf einem Computer ausgeführt wird.

13. Computerprogramm nach Anspruch 11, enthalten in einem elektrischen Trägersignal.

14. Computerprogrammprodukt mit Programmcode-Mitteln, die auf einem computerlesbaren Datenträger gespeichert sind, und geeignet sind, ein Verfahren gemäß einer beliebigen Kombination der Ansprüche 1 bis 9 auszuführen, wenn sie auf einem Computer ausgeführt werden.

15. Computer mit einem flüchtigen und/oder nichtflüchtigen Speicher, in dem ein Computerprogramm nach Anspruch 12 gespeichert ist.

16. Elektronische Datenstruktur, erhältlich durch ein Verfahren gemäß einem oder mehreren der Ansprüche 1 bis 9.
